# EUROPÄISCHE PATENTSCHRIFT

(11) **EP 0 918 222 B1**
(45) Veröffentlichungstag und Bekanntmachung des Hinweises auf die Patenterteilung: **30.01.2002**
(21) Anmeldenummer: 98120980.2
(22) Anmeldetag: 05.11.1998
(51) Int. Cl.: G01P 1/12, G07C 5/08

(54) **Fahrtschreiber mit einem flachen, quaderförmigen Einbaugehäuse und einer herausziehbaren Druckerbaugruppe**
Tachograph with a flat box-like housing and a pull-out printer unit
Tachygraphe avec un boîtier plat et parallélépipédique et un bloc-imprimante amovible

(30) Priorität: 19.11.1997 DE 29720521 U
(43) Veröffentlichungstag der Anmeldung: 26.05.1999
(73) Patentinhaber: Mannesmann VDO Aktiengesellschaft, 60388 Frankfurt am Main (DE)
(72) Erfinder: Burkart, Harald Dipl.-Ing. (FH), 78054 Villingen-Schwenningen (DE); Lais, Norbert Dipl.-Ing. (FH), 78052 Villingen-Schwenningen (DE); Büscher, Ludwig Dipl.-Inform. (FH), 78048 Villingen-Schwenningen (DE); Lindinger, Andreas Dipl.-Ing. (FH), 78658 Flözlingen (DE); Kraus, Ulrich Dipl.-Industriedesigner, 78056 Villingen-Schwenningen (DE); Klostermeier, Dieter Dipl.-Ing. (FH), 78050 Villingen-Schwenningen (DE)

(56) Entgegenhaltungen:
- EP-A- 0 224 616
- EP-A- 0 624 856
- EP-A- 0 652 129
- EP-B- 0 191 413
- DE-A- 19 536 515

## Beschreibung

Die Erfindung betrifft einen Fahrtschreiber mit einem flachen, quaderförmigen Einbaugehäuse, mit einer Anzeigeeinrichtung und mit Vorkehrungen für eine frontseitige Eingabe und Entnahme von fahrerbezogenen Datenkarten, mit Tasten zur Funktionssteuerung und zum Aufrufen von Speicherinhalten des Fahrtschreibers sowie mit einer Druckvorrichtung, in welcher ein bandförmiger Druckträger Anwendung findet.

Bei einem derartigen Gerätekonzept erfordert die Druckvorrichtung einen großen und im Hinblick auf die flache Ausbildung des Einbaugehäuses ungünstigen Bauraum.

Außerdem besteht aufgrund des üblichen Einbauortes des Fahrtschreibers im Armaturenbrett zumindest jedoch im haptischen Bereich des Fahrers und aufgrund der Tatsache des im wesentlichen frontwandbündigen Einbaus das Problem der Zugänglichkeit der gattungsgemäßen Druckvorrichtung insbesondere hinsichtlich des Einsetzens des Bandwickels in eine in geeigneter Weise zu gestaltende Aufnahme sowie der Handhabung des Bandanfangs beim Einfädeln in die Führungs- und Transportmittel der Druckvorrichtung. Zusätzlich wird das geschilderte bauliche Problem dadurch verstärkt, daß an der Frontwand des Fahrtschreibers die Anzeigeeinrichtung beobachtbar sein, die Funktionstasten betätigt werden und die Schächte für die Datenkarten zugänglich sein müssen.

Die Aufgabe der vorliegenden Erfindung bestand somit darin, in einem Fahrtschreiber der gattungsgemäßen Art eine Druckvorrichtung zu schaffen, die den Handhabungserfordernissen gerecht wird und eine für Fahrtschreiber übliche Serienfertigung mit einem möglichst geringen Bauteileaufwand und einer milieugerechten hohen Qualität gestattet.

Die Lösung der Aufgabe beschreibt der Anspruch 1. Weitere vorteilhafte Ausgestaltungen der Erfindung gehen aus den Unteransprüchen hervor.

Der entscheidende Vorteil der gefundenen Lösung ist darin zu sehen, daß aus dem eigentlichen Druckwerk, einer Aufnahme für den Bandwickel und einem Element der Frontwand des Fahrtschreibers eine kompakte, in dem Fahrtschreiber verschiebbar gelagerte Druckerbaugruppe gebildet ist, die für ein Einsetzen eines Bandwickels keine Relativbewegung zwischen dem Druckwerk und der Aufnahme für den Bandwickel erforderlich macht. Die vorgeschlagene Druckerbaugruppe ermöglicht bei einem vollständig und nicht ohne weiteres lösbar eingebauten Gehäuse, mit einer gegen den Benutzer ausgerichteten Anzeigevorrichtung ein bequemes Einsetzen des Bandwickels in die vorgesehene Aufnahme und ein Einfädeln des Bandanfangs im wesentlichen von oben. Aufgrund der gewölbten Bauform ist dabei für den Zugang zur Aufnahme lediglich ein relativ kurzer Hub der Druckerbaugruppe erforderlich. Das heißt, das Befestigen des Druckwerkes durch Einspannen zwischen der mit der Aufnahme einteilig hergestellten Flanschplatte und dem Frontwandelement bietet die geringstmögliche Baulänge. Außerdem ermöglicht diese Bauform einen relativ kurzen Bandabschnitt zwischen dem Bandwickel und der Abreißkante, was das Einfädeln des Bandanfangs erleichtert und feuchtigkeitsbedingte Banddehnungen verringert.

Als Vorteil sei ferner noch erwähnt, daß die Druckerbaugruppe derart gestaltet ist, daß sie frontseitig in die Frontflächengestaltung des Fahrtschreibers integriert ist. Außerdem ist das Frontwandelement zusätzlich als Tastatur ausgebaut und mit dem Druckträger zugeordneten Führungsmitteln versehen, die innerhalb des von außen unzugänglichen Abschnitts zwischen der Andrück- und Transportwalze und dem Ausgabeschlitz ein ungehindertes Durchschieben des Bandanfangs gestatten. Mit der Ausbildung von Aufnahme, Flanschplatte und Führungsschienen als ein einziges, spritzgießtechnisch herstellbares Bauteil sind insbesondere die Teilevielfalt und die Montagezeiten erheblich reduziert.

Im folgenden sei die Erfindung anhand der Zeichnungen näher erläutert. Es zeigen:
- Figur 1: eine Frontansicht eines Fahrtschreibers der erfindungsgemäßen Art,
- Figur 2: eine Explosionsdarstellung der Druckerbaugruppe.
- Figur 3: eine Seitenansicht und Teilschnittdarstellungen des Fahrtschreibers gemäß Figur 1 mit herausgezogener Druckerbaugruppe,

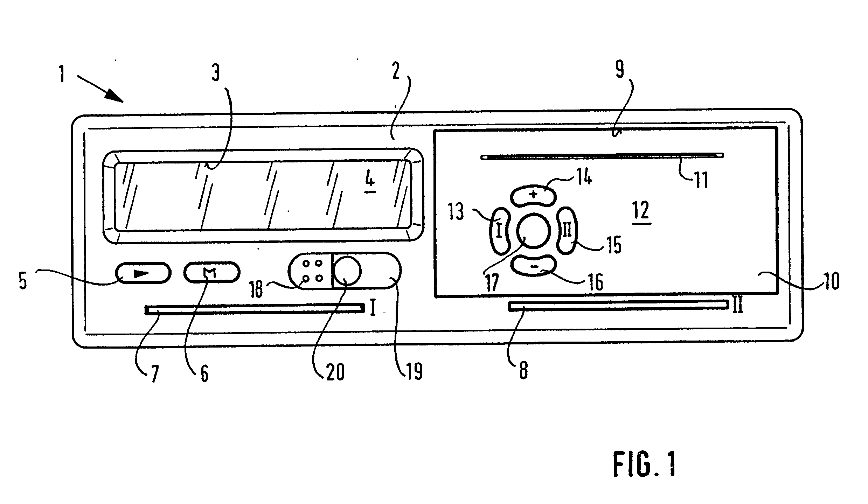

Wie die Figur 1 zeigt, weist der betreffende Fahrtschreiber 1 ein quaderförmiges Einbaugehäuse auf, dessen Frontseite von einer Blende beziehungsweise von einer zu einer Funktionsbaugruppe ausgerüsteten und mit dem Einbaugehäuse in geeigneter Weise verbundenen Frontwand 2 gebildet wird. In der Frontwand 2 sind ein Fensterausschnitt 3 für eine dem Fahrtschreiber 1 zugeordneten Anzeigeeinrichtung 4 ausgebildet, Tasten 5 und 6 gelagert sowie Öffnungen 7 und 8 angebracht, welche dem Eingeben von den Fahrern I bzw. II zugeordneten Datenkarten dienen. Ferner ist aus der Figur 1 ersichtlich, daß in der Frontwand 2 eine Aussparung 9 vorgesehen ist, welche von einer im folgenden als Frontwandelement 10 bezeichneten Blende abgedeckt ist. Dabei fügt sich das Frontwandelement 10 gestalterisch, insbesondere frontflächenbündig, in die Frontfläche des Fahrtschreibers 1 ein. Das Frontwandelement 10 ist ein Bauteil einer im folgenden noch näher zu beschreibenden Druckerbaugruppe und ist demzufolge mit einem Schlitz 11, der im Zusammenwirken mit der Frontfläche des Frontwandelementes 10 Abreißkanten bildet, für den Durchtritt eines vorzugsweise bandförmigen Druckträgers versehen.

Zum Einsetzen der Vorratsrolle bzw. des Bandwickels des Druckträgers ist die Druckerbaugruppe in dem Fahrtschreiber 1 verschiebbar gelagert und wirkt mit einer geeigneten Verriegelungseinrichtung zusammen. Dabei dient das gesamte Frontwandelement 10, das zu diesem Zweck mit einer ausreichend großen Freifläche bzw. Tastfläche 12 versehen ist, als Taste zum Betätigen, das heißt zum Entriegeln der Verriegelungseinrichtung. Ferner sind in dem Frontwandelement 10 mehrere Tasten 13, 14, 15, 16 und 17 gelagert, so daß das Frontwandelement 10 gleichzeitig auch als Tastatur ausgebaut ist.

Die Anzeigevorrichtung 4 dient im wesentlichen der Anzeige der wichtigsten Arbeitszeitdaten. Zum Anwählen der betreffenden Werte sind den Fahrern I und II die Tasten 13 und 15 sowie die Menütaste 6 zugeordnet. Die Tasten 14 und 16 dienen dem "Vor- und Rückwärtsblättern" in den für die angewählte Arbeitszeit- Datenart ermittelten Datensätzen. Mit der Taste 5 wird im Zusammenwirken mit einer der Tasten 13 oder 15 die jeweilige Fahrerdatenkarte zur Entnahme freigegeben; mit der Taste 17 wird ein Druckvorgang und die Ausgabe eines Beleges ausgelöst. Eine ebenfalls in der Frontwand 10 ausgebildete Steckerfassung 18 dient dem Anschluß beispielsweise eines PCs. Eine weitere Steckerfassung ist mit einer Abdeckung 19 versehen, die mittels einer Plombe 20 gesichert ist. Diese Steckerfassung ist für Diagnose- und Parametrierzwecke vorgesehen.

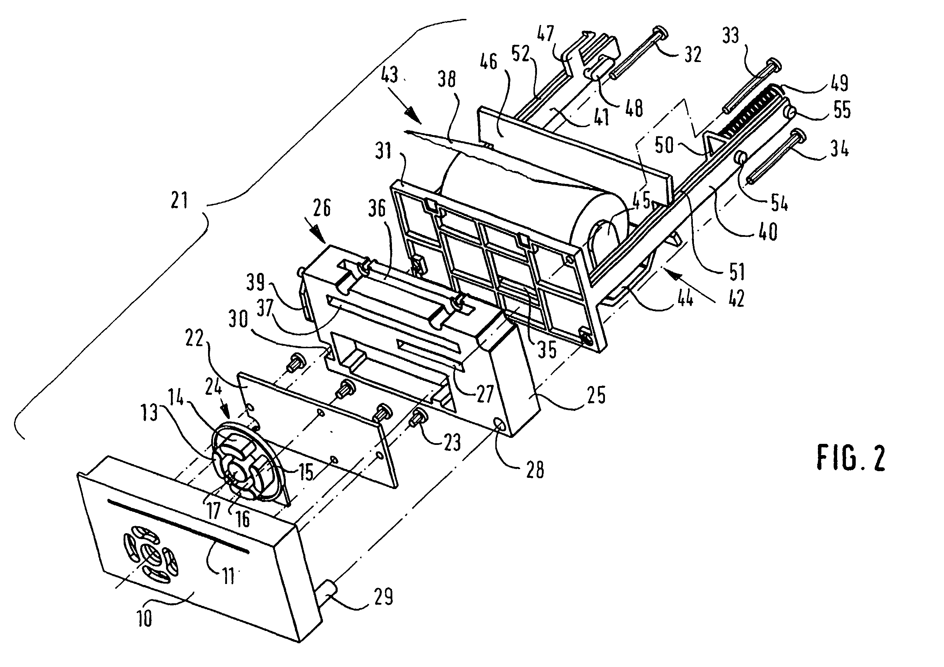

In der Explosionsdarstellung, Figur 2, ist die gesamte Druckerbaugruppe mit 21 bezeichnet. Die Figur 2 zeigt, daß das Frontwandelement 10, an dem der Schlitz 11 und nicht näher bezeichnete Öffnungen für den Durchtritt der Tasten 13, 14, 15, 16 und 17 ausgebildet sind, zu einer Tastatur komplettierbar ist, indem eine Leiterplatte 22 mittels mehrerer Schrauben, von denen eine mit 23 bezeichnet ist, an der Innenseite des Frontwandelementes 10 befestigt wird, und zwar unter Zwischenlage einer die Tasten 13, 14, 15, 16 und 17 beinhaltenden Tastenmatte 24. Dabei sind an der Innenseite des Frontwandelementes 10 dem Ausrichten und Haltern der Tastenmatte 24 dienende Konturen ausgeformt und auf der Leiterplatte 22 wenigstens den Tasten 13, 14, 15, 16 und 17 zugeordnete Kontaktflächen mit geeigneten Leiterbahnen ausgebildet, die der Einfachheit halber nicht dargestellt sind. Ebenso ist in der Figur 2 auf die Darstellung einer der Leiterplatte 22 zugeordneten elektrischen Verbindung verzichtet. Ein im Gehäuse 25 eines handelsüblichen Druckwerkes 26, welches an das Frontwandelement 10 anflanschbar ist, ausgebildeter Schlitz 27, stellt einen Kanal zur Durchführung eines der Leiterplatte 22 zugeordneten Flachbandkabels dar. Mit 28 ist eine in dem Gehäuse 25 angebrachte Durchgangsbohrung bezeichnet, welcher ein an dem Frontwandelement 10 ausgebildeter Gewindebolzen 29 zugeordnet ist. Dem selben Zweck, nämlich dem gegenseitigen Ausrichten von Frontwandelement 10 und Gehäuse 25 des Druckwerkes 26 dient ein weiterer, in Figur 2 nicht sichtbarer Gewindebolzen, dem eine am Gehäuse 25 vorgesehene Aussparung 30 zugeordnet ist. Das Zusammenfügen von Frontwandelement 10 und Druckwerk 26 erfolgt durch Verschrauben des Frontwandelementes 10 mit einer Flanschplatte 31 unter Verwendung von Schrauben 32, 33 und 34. Dabei gehen als Ausrichtmittel zwischen dem Druckwerk 26 und der Flanschplatte 31 dienende, nicht näher bezeichnete, einander zugeordnete Ansätze und Senkungen in Eingriff. Mit 35 ist ein in der Flanschplatte 31 angebrachter Schlitz bezeichnet, der der Durchführung sowohl des der Leiterplatte 22 zugeordneten Flachbandkabels als auch von mit dem Druckwerk verbundenen Leitungen dient. Im Gehäuse 25 ausgebildete Spalte 36 bzw. 37 stellen bezogen auf das Druckwerk 26 die Einlauf- und die Auslauföffnung für den Druckträger 38 dar. Ein mit 39 bezeichneter Hebel dient dem Anheben des Druckkopfes, vorzugsweise ist ein Thermodruckkopf vorgesehen, von der Andrück- und Transportwalze beim Einfädeln des Druckträgers 38.

Wie aus der Figur 2 ferner ersichtlich ist, sind an der Flanschplatte 31 sowohl Führungsschienen 40 und 41 als auch eine im wesentlichen als Schale ausgebildete Aufnahme 42 für den Druckträger-Bandwickel 43 unmittelbar angeformt. Die Lagerung des Bandwickels 43 erfolgt dabei zwischen am Boden 44 der Aufnahme 42 federnd ausgebildeten Lagerschenkeln, von denen einer - 45 - in Figur 2 sichtbar ist. Vorzugsweise sind die Lagerschenkel 45 mit in geeigneter Weise ballig geformten "Lagerzapfen" versehen, die in den hülsenförmigen Wickeldorn des Bandwickels 43 eingreifen und die es ermöglichen den Bandwickel 43 lediglich durch Einrasten zu montieren. Eine an der Aufnahme 42 angeformte Wand 46 ist derart ausgebildet, daß sie bei aus dem Fahrtschreiber 1 herausgezogener Druckerbaugruppe 21 als Schild dient, das heißt, die Öffnung 9 weitgehend abdeckt und auf diese Weise ein Eindringen von Schmutz in den Fahrtschreiber 1 während des Einsetzens eines Bandwickels 43 verhindert. Ferner geht aus der Figur 2 hervor, daß an der Führungsschiene 41 ein Riegel 47 angeformt ist, der der Druckerbaugruppe 21 im herausgezogenen Zustand als Anschlag dient. Ein mit 48 bezeichnetes Schaltelement ist für die Verrastung der Druckerbaugruppe 21 vorgesehen. Es bildet im Zusammenwirken mit beispielsweise einer im Gehäuse des Fahrtschreibers 1 ortsfest angeordneten, gefedert gelagerten Herzkurve und einer Druckfeder 49, die an einer an der Führungsschiene 40 ausgebildeten und mit einem nicht bezeichneten Zentrierzapfen versehenen Konsole 50 angreift, ein bistabiles Rastgetriebe.

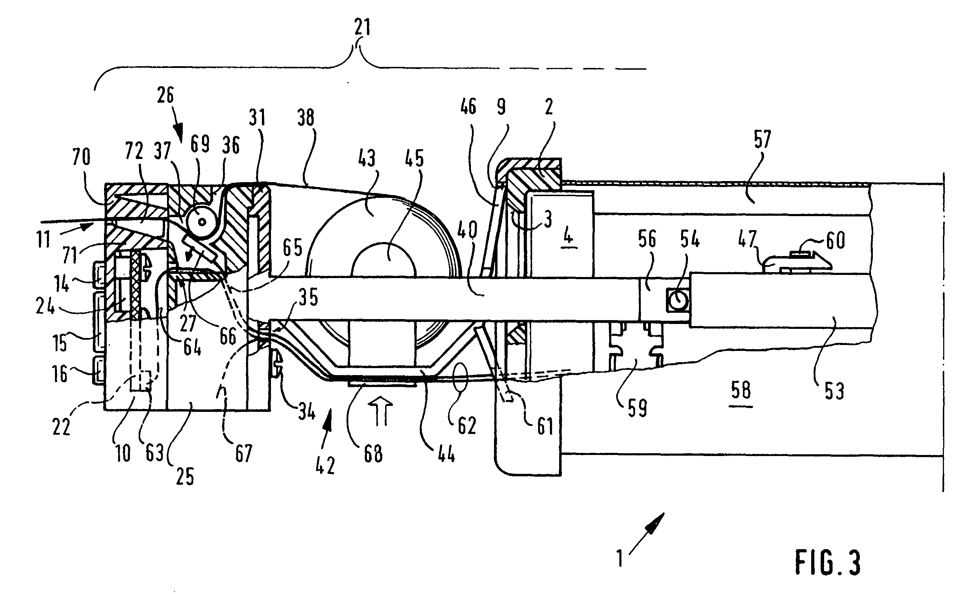

Es sei noch hervorgehoben, daß die Flanschplatte 31, die Aufnahme 42 und die im wesentlichen als H-Profil ausgebildeten Führungsschienen 40, 41 ein einziges und relativ steifes Bauteil bilden. Die in den Führungsschienen 40, 41 sich gegenüberliegend ausgebildeten Nute, von denen in Figur 2 jeweils eine 51 bzw. 52 sichtbar ist dienen ortsfest im Fahrtschreiber 1 angeordneten, im wesentlichen C-profilierten Halteschienen, von denen in Figur 3 eine sichtbar und mit 53 bezeichnet ist, als Führungsmittel. Paarweise an den Führungsschienen 40, 41 angeordnete Mitnehmerzapfen 54 und 55 sind für eine teleskopische Lagerung der Druckerbaugruppe 21 vorgesehen und stehen mit mitlaufenden Zwischenschienen 56 (Figur 3) in Wirkverbindung. Mit 57 ist ein Deckel, mit 58 eine Seitenwand des Einbaugehäuses des Fahrtschreibers 1 bezeichnet an welcher die Halteschiene 53 befestigt ist. Der zweiten parallel liegenden Halteschiene sind mit dem Boden des Einbaugehäuses verbundene, biegesteife Stützen zugeordnet. In Figur 3 ist eine der Stützen sichtbar und mit 59 bezeichnet. An der zuletzt erwähnten Halteschiene ist ein Arm 60 angeformt, der als Anschlag dient und, wie die Figur 3 zeigt, in der dargestellten Position der Druckerbaugruppe 21 mit dem Riegel 47 zusammenwirkt. Außerdem geht aus der Figur 3 hervor, daß die Öffnung 9 bei herausgezogener Druckerbaugruppe 21 sowohl von der Wand 46 als auch von einer ebenfalls an der Aufnahme 42 angeformten Schürze 61 abgedeckt ist. Die Schürze 61 dient, indem in ihr eine geeignete Öffnung ausgebildet ist, zusätzlich als Halterung für ein Leitungsbündel 62, welches das bereits erwähnte mit der Leiterplatte 22 über einen Verbindungsstecker 63 kontaktierte Flachbandkabel 64, ein vorzugsweise Flachbandkabel 65 zur Ansteuerung der Druckelemente des Druckkopfes 66, Leitungen 67 zur Stromversorgung eines dem Transport des Druckträgers 38 dienenden nicht dargestellten Motors sowie Leitungen zu ebenfalls nicht dargestellten Sensoren, die den Transport des Druckträgers 38 überwachen, umfaßt. Mit 68 ist eine am Boden 44 der Aufnahme 42 federnd angeformte Zunge bezeichnet, die der Zugentlastung dient, wobei der Zug im Zusammenhang steht mit nicht dargestellten Mitteln, um in geeigneter Weise beim Einschieben der Druckerbaugruppe 21 im Innern des Fahrtschreibers 1 zu stauen. Wie bereits erwähnt kann der schwenkbar gelagerte Druckkopf 66 mittels des Hebels 39 von der Andrück- und Transportwalze 69 zum Einfädeln des Druckträgers 38 abgehoben werden. Der Antrieb der Andrück- und Transportwalze 69 erfolgt über ein nicht dargestelltes Laufwerk durch den bereits erwähnten im Gehäuse 25 des Druckwerkes 26 angeordneten Motor. Der Vollständigkeit halber sei noch erwähnt, daß an dem Frontwandelement 10 Führungsmittel ausgebildet sind, die beim Einfädeln eines Druckträgers 38 das notwendige selbsttätige Ausrichten des Bandanfangs auf den Schlitz 11 gewährleisten. Es handelt sich dabei um parallel ausgeformte Lamellenreihen 70 und 71 sowie Seitenführungen 72. Die gefundene Lösung bietet somit eine ausreichend gute Handhabbarkeit beim Einsetzen des Bandwickels 43, sie kommt mit dem zur Verfügung stehenden Bauraum aus, sie ist für die Serienfertigung geeignet und sie gliedert sich ästhetisch in die frontseitige Gestaltung des Fahrtschreibers 1 ein.

## Patentansprüche

1. Fahrtschreiber mit einem flachen, quaderförmigen Einbaugehäuse, mit einer Anzeigeeinrichtung (4) und mit Vorkehrungen (7, 8) für eine frontseitige Eingabe und Entnahme von fahrerbezogenen Datenkarten, mit Tasten (5, 6, 13-17) zur Funktionssteuerung und zum Aufrufen von Speicherinhalten des Fahrtschreibers sowie mit einer Druckvorrichtung, in welcher ein bandförmiger Druckträger Anwendung findet
**dadurch gekennzeichnet,**
**daß** ein Element (10) der Frontwand (2) des F ahrtschreibers (1), das Druckwerk (26) und eine Aufnahme (42) für den Bandwickel (43) zu einer Druckerbaugruppe (21) zusammengefügt sind und
**daß** die Druckerbaugruppe (21) in dem Fahrtschreiber (1) derart verschiebbar gelagert ist, daß sie aus dem Fahrtschreiber (1) wenigstens teilweise herausziehbar ist.

2. Fahrtschreiber nach Anspruch 1,
**dadurch gekennzeichnet,**
**daß** die Aufnahme (42) für den Bandwickel (43) an einer die Druckerbaugruppe (21) tragenden Flanschplatte (31) angeformt ist.

3. Fahrtschreiber nach Anspruch 2,
**dadurch gekennzeichnet,**
**daß** die Aufnahme (42) als Schale mit am Boden (44) federnd angeformten Lagerschenkeln (45) ausgebildet ist.

4. Fahrtschreiber nach Anspruch 2,
**dadurch gekennzeichnet,**
**daß** rechtwinklig zur Flanschfläche (31) und im wesentlichen seitenbündig mit der Flanschplatte (31) an dieser Führungsschienen (40, 41) ausgebildet sind.

5. Fahrtschreiber nach Anspruch 1,
**dadurch gekennzeichnet,**
**daß** das Frontwandelement (10) wenigstens einen dem Durchführen des Druckträgers (38) dienenden Schlitz (11) aufweist,
**daß** an dem Frontwandelement (10) dem Druckträger (38) zugeordnete Führungsmittel (70, 71, 72) ausgebildet sind, und
**daß** Vorkehrungen getroffen sind für das Befestigen des Frontwandelementes (10) an der Flanschplatte (31).

6. Fahrtschreiber nach Anspruch 5,
**dadurch gekennzeichnet,**
**daß** in dem Frontwandelement (10) wenigstens eine Taste (13, 14, 15, 16, 17) gelagert ist und
**daß** die der Taste (13, 14, 15, 16, 17) zugeordneten Kontakte auf einer mit dem Frontwandelement (10) rückseitig verbundenen Leiterplatte (22) aufgebracht sind.

7. Fahrtschreiber nach Anspruch 1,
**dadurch gekennzeichnet,**
**daß** zur Lagerung der Druckerbaugruppe (21) teleskopisch in Wirkverbindung stehende Führungsmittel (40, 41, 53, 54, 55, 56) vorgesehen sind.

8. Fahrtschreiber nach Anspruch 3,
**dadurch gekennzeichnet,**
**daß** die eine Wand der Aufnahme (42) derart ausgebildet ist, daß sie, die durch die Verschiebbarkeit der Druckerbaugruppe (21) erforderliche Öffnung (9) in der Frontwand (2) des Fahrtschreibers (1) beim Wechseln des Bandwickels (43) weitgehend abdeckt.

9. Fahrtschreiber nach Anspruch 1,
**dadurch gekennzeichnet,**
**daß** der Druckerbaugruppe (21) eine Ver- und Entriegelungseinrichtung zugeordnet ist, wobei das Frontwandelement (10) als Betätigungselement dient.

10. Fahrtschreiber nach Anspruch 1,
**dadurch gekennzeichnet,**
**daß** der Druckerbaugruppe (21) als Ver- und Entriegelungseinrichtung ein bistabiles Rastgetriebe zugeordnet ist.

## Claims

1. Tachograph having a flat, parallelepiped-shaped installation housing, having a display device (4) and having measures (7, 8) for inserting and removing driver-related data cards at the front, having keys (5, 6, 13-17) for functional control and for calling memory contents of the tachograph, and having a printing device in which a tape-shaped print carrier is applied, **characterized in that** an element (10) of the front panel (2) of the tachograph (1), the printing unit (26) and a receptacle (42) for the tape spool (43) are combined to form a printer assembly (21), and **in that** the printer assembly (21) can be stored slid into the tachograph (1) in such a way that it can be at least partially pulled out of the tachograph (1).

2. Tachograph according to Claim 1, **characterized in that** the receptacle (42) for the tape spool (43) is formed on a flange plate (31) which supports the printer assembly (21).

3. Tachograph according to Claim 2, **characterized in that** the receptacle (42) is embodied as a shell with bearing limbs (45) formed onto the base (44) in sprung fashion.

4. Tachograph according to Claim 2, **characterized in that** guide rails (40, 41) are formed onto the flange plate (31) at right angles to the flange surface (31) and essentially flush with the sides of the flange plate (31).

5. Tachograph according to Claim 1, **characterized in that** the front panel element (10) has at least one slot (11) which is used to feed through the print carrier (38), **in that** guide means (70, 71, 72) which are assigned to the print carrier (38) are formed on the front panel element (10), and **in that** measures are taken for the attachment of the front panel element (10) to the flange plate (31).

6. Tachograph according to Claim 5, **characterized in that** at least one key (13, 14, 15, 16, 17) is mounted in the front panel element (10), and **in that** the contacts which are assigned to the key (13, 14, 15, 16, 17) are provided on a printed circuit board (22) which is connected to the rear of the front panel element (10).

7. Tachograph according to Claim 1, **characterized in that** telescopically operatively connected guide means (40, 41, 53, 54, 55, 56) are provided for mounting the printer assembly (21).

8. Tachograph according to Claim 3, **characterized in that** the one wall of the receptacle (42) is formed in such a way that it largely covers the opening (9), necessary as a result of the slideability of the printer assembly (21), in the front panel (2) of the tachograph (1) when the tape spool (43) is changed.

9. Tachograph according to Claim 1, **characterized in that** a locking and unlocking device is assigned to the printer assembly (21), the front panel element (10) serving as an activation element.

10. Tachograph according to Claim 1, **characterized in that** a bistable indexing gear mechanism is assigned to the printer assembly (21) as a locking and unlocking device.

## Revendications

1. Enregistreur de route avec un boîtier à encastrer plat, parallélépipédique, avec un dispositif d'affichage (4) et avec des dispositions (7, 8) prises pour pouvoir opérer frontalement une introduction et un retrait de cartes de données référées au conducteur, avec des touches (5, 6, 13-17) pour la commande des fonctions et pour l'appel de contenus de mémoire de l'enregistreur de route ainsi qu'avec une imprimante dans laquelle est utilisé un support d'impression en forme de bande,
**caractérisé par le fait**
**qu'**un élément (10) de la paroi frontale (2) de l'enregistreur de route (1), le mécanisme d'impression (26) et un logement (42) pour la bobine à bande (43) sont assemblés en un sous-ensemble d'impression (21) et que ledit sous-ensemble d'impression (21) est monté mobile dans l'enregistreur de route (1) de telle sorte qu'il puisse être extrait au moins partiellement dudit enregistreur de route (1).

2. Enregistreur de route selon la revendication 1,
**caractérisé par le fait**
**que** le logement (42) pour la bobine à bande (43) est formé sur une plaque d'assemblage (31) portant le sous-ensemble d'impression (21).

3. Enregistreur de route selon la revendication 2,
**caractérisé par le fait**
**que** le logement (42) est réalisé sous forme de cuvette avec des branches de palier (45) élastiquement formées au fond (44).

4. Enregistreur de route selon la revendication 2,
**caractérisé par le fait**
**que**, perpendiculairement à la surface de plaque (31) et, pour l'essentiel, latéralement à fleur de ladite plaque d'assemblage (31), des rails de guidage (40, 41) sont réalisés sur celle-ci.

5. Enregistreur de route selon la revendication 1,
**caractérisé par le fait**
**que** l'élément de paroi frontale (10) présente au moins une fente (11) servant au passage du support d'enregistrement (38),
**que** sur ledit élément de paroi frontale (10) sont formés des moyens de guidage (70, 71, 72) associés audit support d'enregistrement (38) et
**que** des dispositions ont été prises pour la fixation dudit élément de paroi frontale (10) sur la plaque d'assemblage (31).

6. Enregistreur de route selon la revendication 5,
**caractérisé par le fait**
**que** dans l'élément de paroi frontale (10) est montée au moins une touche (13, 14, 15, 16, 17) et
**que** les contacts associés à ladite touche (13, 14, 15, 16, 17) sont disposés sur une platine à circuits imprimés (22) reliée par la face arrière audit élément de paroi frontale (10).

7. Enregistreur de route selon la revendication 1,
**caractérisé par le fait**
**que** pour le montage du sous-ensemble d'impression (21) sont prévus des moyens de guidage (40, 41, 53, 54, 55, 56) fonctionnellement reliés de manière télescopique.

8. Enregistreur de route selon la revendication 3,
**caractérisé par le fait**
**que** l'une des parois du logement (42) présente une configuration telle que, lors du changement de la bobine à bande (43), elle recouvre largement l'ouverture (9), nécessaire par la possibilité de déplacement du sous-ensemble d'impression (21), dans la paroi frontale (2) de l'enregistreur de route (1)

9. Enregistreur de route selon la revendication 1,
**caractérisé par le fait**
**qu'**au sous-ensemble d'impression (21) est associé un dispositif de verrouillage et déverrouillage, l'élément de paroi frontale (10) servant d'élément d'actionnement.

10. Enregistreur de route selon la revendication 1,
**caractérisé par le fait**
**qu'**au sous-ensemble d'impression (21) est associé, comme dispositif de verrouillage et déverrouillage, un mécanisme à arrêts instantanés.
